# EUROPEAN PATENT APPLICATION

(11) **EP 3 539 655 A1**
(43) Date of publication of application: **18.09.2019**
(21) Application number: 16921159.6
(22) Date of filing: 24.11.2016
(51) Int. Cl.: B01J 35/00, B01J 23/42, B01J 23/44, B01J 23/46, B01J 23/50, B01J 23/52, B01J 31/06, B01J 31/28

(54) **METHOD FOR PREPARING PRECIOUS METAL ISOLATED ATOMS IN SOLUTION, AND APPLICATIONS THEREOF**

(30) Priority: 11.11.2016 CN 201611042175
(71) Applicant: Dalian Institute of Chemical Physics, Chinese Academy of Sciences, Dalian, Liaoning 116023 (CN)
(72) Inventor: ZHANG, Zongchao, Dalian Liaoning 116023 (CN); LIU, Kairui, Dalian Liaoning 116023 (CN); MAO, Jingbo, Dalian Liaoning 116023 (CN)
(74) Representative: Casalonga
(86) International application number: PCT/CN2016/000653
(87) International publication number: WO 2018/085959

(57) **Abstract**

The invention provides a method for the preparation of isolated noble metal atoms in a solution and the application thereof. The method comprises mixing a protective agent, a precious metal compound, and a reducing agent thoroughly. At certain temperature, isolated noble metal atoms are formed after reaction, thereby leading to isolated noble metal atoms which are stable in the solution. Isolated noble metal atoms on solid material surface can be prepared by impregnating a noble metal atom solution of this invention onto a solid medium. Alloys and catalysts etc. can be prepared by using the single atoms solution of this invention as raw material. The invention achieves, for the first time, the preparation of reduced single atoms in a solution phase. Formation of metal nanoparticles is avoided compared to the conventional synthesis of metal materials in solution phase. The reduced single atom exists in the form of single metal atoms in the solution. Compared with solid surface supported monoatomic materials, this invention allows for the preparation of materials that are characterized by high metal loading and high stability.

## Description

### BACHGROUND OF THE INVENTION

### 1. FIELD OF THE INVENTION

The present invention relates to a method to prepare noble single atom in solution and application thereof.

### 2. DESCRIPTION OF RELATED ARTS

Precious metals are widely used materials in modern industry and scientific research. Precious metals and their alloys have excellent electrical and thermal conductivity, oxidation resistance, corrosion resistance, unique catalytic activity, and special magnetic and mechanical properties. They are widely used in aviation, marine, biomedical, iron and steel smelting, petrochemical and electronic equipment. For example, Pt-Ir and Pt-Ni alloys are commonly used spark plug materials; Pt-W, Pt-Rh and Pt-Pd-Rh alloys are commonly used resistance strain materials; Pt-Pd-Rh three-way catalyst is the main material for treating automobile exhaust.

However, the high price of precious metals has severely restricted their full use in various fields. For example, in the Pt/Al₂O₃ catalyst, which is used for the petroleum catalytic reforming, Pt exists in the form of nanoparticles. Hence, most of the Pt atoms are inside the nanoparticles and are not accessible to reactants to catalyze the reaction, resulting in wasting the metals and thus increasing the cost of the catalyst.

Isolated noble metal atoms allow for the full utilization of precious metals. However, the method of synthesizing isolated reduced noble metal atoms in solution has not been reported so far. Because zero-valent precious metal atoms are not charged, as a result, there is no electrostatic repulsion between them. The reduced noble metal atoms have a larger degree of freedom of movement in solution than that on solid surface, so isolated zero-valent noble metal atoms will rapidly aggregate to form clusters or nanoparticles in solution. Therefore, the controlled synthesis of isolated noble metal atoms in solution has always been a huge challenge in the field of material science and technology.

### SUMMARY OF THE INVENTION

The present invention provides a method to prepare noble metal single atom in solution and application of the material so prepared. In order to achieve the object of the present invention, the detail technical proposal is described below.

A method to prepare isolated noble single atom in solution: the protective agent, the noble metal compound precursor, the reducing agent and the solvent are sufficiently mixed according to a certain ratio; at a certain temperature, isolated noble single atoms are obtained after reduction.

The isolated noble metal atoms are a platinum group element or a post platinum group element; the platinum group elements consist of palladium, rhodium, ruthenium, osmium, iridium or platinum; and the post platinum group elements consists of silver or gold.

The noble metal compound precursor is a platinum compound precursor, a palladium compound precursor, a rhodium compound precursor, an iridium compound precursor, a ruthenium compound precursor, an osmium compound precursor, a gold compound precursor, or a silver compound precursor.

The platinum compound precursor is one of chloroplatinic acid, sodium chloroplatinate, potassium chloroplatinate, platinite chloride, platinum chloride, diethylamine chloride platinum, platinum nitrate, 1, 5-cyclooctadiene dichloride platinum, trichloride (ethylene) potassium platinate, dichloro-tetramine platinum, dinitrile phenyl dichloroplatin, dichloroplatin (triphenyl phosphite) dichloroplatin or ammonium tetrachloroplatinate.

The palladium compound precursor is one of palladium chloride, palladium nitrate, tetrachloroplatinate, palladium(2+) tetraammine-dichloride, trans-dichlorodiammine palladium (II), palladium(II) acetate, palladium(II) sulfate, palladium(II) trifluoroacetate, palladium(II) acetylacetonate, potassium hexachloropalladate(IV), ammonium hexachloropalladate(IV), palladium tetraammonia (II) acetic acid, sodium tetrachloropalladate(II), potassium tetrachloropalladate(II), ammonium tetrachloropalladate(II), potassium tetracyanopalladate(II) hydrate, potassium tetrabromopalladate(II), palladium pivalate, palladium(II) cyanide, palladium(II) bromide, palladium thiosulfate(II), palladium(II) iodide, sulfonated palladium(II), (1,3-Bis(diphenylphosphino)propane)palladium(II) chloride, Dichloro(1,5-cyclooctadiene)palladium(II), (2,2'-Bipyridine) dichloropalladium(II), [1,2-Bis(diphenylphosphino)ethane]dichloropalladium(II), 1,4-Bis(diphenylphosphino)butane-palladium(II) chloride, and (Ethylenediamine) palladium(II) chloride.

The rhodium compound precursor is one of rhodium (III) nitrate, acetyl acetone rhodium (III), Di-µ-chlorotetraethylene dirhodium(I), sodium hexachlororhodate(III), potassium hexachlororhodate(III), ammonium hexachlororhodate(III), rhodium chloride (III), tris(triphenylphosphine)rhodium(I) chloride, trichlorotris(ethylenediamine)rhodium(III), bis(ethylene) rhodium(I) acetylacetonate(I), (acetylacetonato)dicarbonylrhodium(I), dicarbonyl (pentamethylcyclopentadienyl) rhodium(I), and bis(1,5-cyclooctadiene)rhodium(I) tetrafluoroborate.

The iridium compound precursor is one of hydrogen hexachloroiridate(IV),iridium(III) acetylacetonate, sodium hexachloroiridate(III), potassium hexachloroiridate(III), ammonium hexachloroiridate(IV), potassium hexanitroiridate(III), iridium(III) chloride, iridium(III) bromide, (acetylacetonato) (1,5-cyclooctadiene)iridium(I), (1,5-cyclooctadiene) (hexafluoroacetylacetonato) iridium(I), pentaamminechloroiridium(III) chloride, dichlorotetrakis (2-(2-pyridinyl) phenyl) diiridium(III), (acetylacetonato) dicarbonyliridium(I), bis(1,5-cyclooctadiene) iridium(I) tetrafluoroborate, (1,5-cyclooctadiene) (pyridine) (tricyclohexylphosphine)-iridium(I) hexafluorophosphate, and bis[1,2-bis(diphenylphosphino)ethane] carbonylchloroiridium(I).

The ruthenium compound precursor is one of ruthenium(III) chloride, ruthenium(III) acetylacetonate, ruthenium(III) nitrosyl nitrate solution, hexaammineruthenium(II) chloride, ammonium hexacyanoruthenate(II), potassium hexacyanoruthenate(II), tetrapropylammonium perruthenate, ethylenediaminetetraacetic acid ruthenium(III) chloride, potassium aquapentachlororuthenate(III), ruthenium(III) iodide hydrate, tris(triphenylphosphine) ruthenium(II) dichloride, hexaammineruthenium(III) chloride, dichlorotetrakis (triphenylphosphine)ruthenium(II), dichloro [(2,6,1 0-dodecatriene)-1,12-diyl] ruthenium(IV), dichlorotris(1,10-phenanthroline)ruthenium(II), bis(triphenylphosphine) ruthenium(II) dicarbonyl chloride, and pentaamminechlororuthenium(III) chloride.

The osmium compound precursor is one of potassium osmate(VI) dihydrate, potassium hexachloroosmate(IV), ammonium hexachloroosmate(IV), bis(pentamethylcyclopentadienyl)osmium(II), osmium(III) chloride, and pentaammine (trifluoromethanesulfonato)osmium(III) triflate.

The gold compound precursor is one of potassium gold(III) chloride, sodium dicyanoaurate(I), gold(I) chloride, Chloro(dimethylsulfide)gold(I), gold(III) oxide, Trichloro(pyridine)gold(III), gold(III) chloride, sodium tetrachloroaurate(III), gold(III) chloride, ammonium tetrachloroaurate(III), gold(I) cyanide, chlorocarbonylgold(I), gold(III) bromide, gold(I) iodide, and chloro (triphenylphosphine)gold(I).

The silver compound precursor is one of silver nitrate, silver lactate, silver citrate, silver chlorate, silver cyanate, silver bromate, silver acetate, silver trifluoroacetate, silver acetylacetonate, potassium dicyanoargentate, silver pentafluoropropionate, silver cyanide, and silver benzoate.

The reducing agent is one from alcohol compounds, glucose, formic acid, citric acid, tartaric acid, ascorbic acid, hydrazine hydrate, borohydride or hydrogen.

The reducing agent is one from or mixture of methanol, ethanol, propanol, isopropanol, n-butanol, isobutanol, butanol, tert-butanol, ethylene glycol or glycerol.

The protective agent is a block copolymer containing siloxane groups and hydrophilic polymers.

The protective agent is a block copolymer containing siloxane groups and polyether groups.

The protective agent is a polysiloxane-polyethyleneglycol copolymer.

The protective agent is preferred with structural formula as follows:

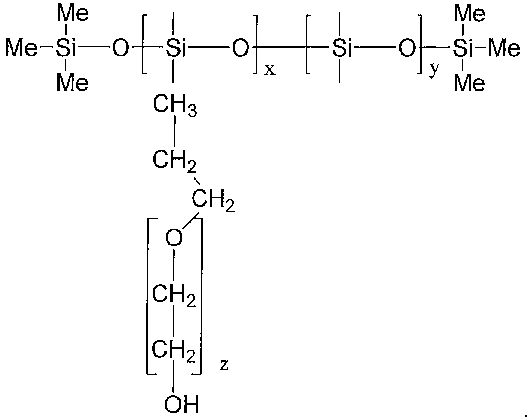

The solvent is an organic or inorganic solvent.

The inorganic solvent is one from or mixture of water, sulfoxide chloride, thioyl chloride, hydrazine hydrate, thioyl chloride fluoride, hydrochloric acid, nitric acid or sulfuric acid.

The organic solvent is one from or mixture of aromatic hydrocarbons, aliphatic hydrocarbons, alicyclic hydrocarbons, halogenated hydrocarbons, alcohols, ethers, esters, ketones, aldehydes, carboxylic acids, nitriles, pyridines or phenols.

The aromatic hydrocarbons is one from or mixture of benzene, toluene, ethylbenzene, xylene, trimethylbenzene, propylene, isopropyl benzene, naphthalene, anthracene or phenanthrene.

The aliphatic hydrocarbons are one from or mixture of pentane, hexane, heptane, octane, decane, hexane, undecane, dodecane, tridecane, tetradecane, pentadecane, hexadecane, heptadecane, octadecane, nonadecane or eicosane.

The alicyclic hydrocarbons are one from or mixture of cyclopentane, cyclohexane, cycloheptane, cyclooctane, cyclononane, cyclonontane, cyclohexane, cycloundecane, cyclododecane or cyclotridecane.

The halogenated hydrocarbons are one from or mixture of chloromethane, methyl bromide, chloroethane, bromoethane, chloropropane, bromobutane, chlorobutane, chloropentane, chlorohexane, bromopentane, chloroheptane, bromoheptane, chlorooctane, chlorooctane, chlorononane, bromooctane, chlorooctane, chlorooctane, chlorooctane, chlorooctane, chlorooctane, chlorooctane, chlorooctane, chlorooctane, chlorooctane, chlorooctane, chlorooctane, chlorobenzene, bromobenzene, chlorotoluene, bromotoluene, chloroethyl benzene or bromoethyl benzene.

The alcohols is one from or mixture of methanol, ethanol, propanol, isopropanol, n-butanol, isobutanol, 2-butanol, tert-butanol, ethylene glycol or goycerol.

The ethers are one from or mixture of ether, dipropyl ether, diisopropyl ether, ethyl butyl ether, dibutyl ether, diamyl ether, diisoamyl ether, dihexyl ether, tetrahydrofuran, 1, 4-dioxane, trimeraldehyde, propylene oxide, dichlorodiethyl ether or dichlorodiisopropyl ether.

The esters are one from or mixture of methyl formate, ethyl acetate, methyl acetate, propyl acetate, butyl acetate, isopropyl acetate, butyl acetate, butyl acetate, ethyl butyrate, propyl butyrate, methyl acrylate, ethyl acrylate, diethyl ethaneioate, ethyl isobutyrate, Ethyl 2-methylbutyrate, dibutyl sebacate, dimethyl phthalate or dibutyl phthalate.

The ketones are one from or mixture of acetone, methyl ketone, 2 - pentanone, 3 - pentanone, acetyl acetone, Methyl Isopropyl Ketone, 2 - hexanone, 3 - hexanone, 2 - methyl - 3 - pentanone, Pinacolone, 4 - methyl - 2 - pentanone, 2 - heptyl ketone, cyclopentanone and cyclohexanone, 3-heptanone, 4-heptanone, 2,4-Dimethyl-3-pentanone, ketone, 5 - methyl - 3 - heptyl ketones, 2, 6 - dimethyl - 3 - heptyl ketone, nonyl ketone or the mixture of them.

The aldehydes are one from or mixture of acetaldehyde, propionaldehyde, acrolein, isobutyraldehyde, butyraldehyde, benzaldehyde, paraldehyde, cinnamaldehyde or crotonaldehyde.

The carboxylic acids are one from or mixture of formic acid, acetic acid, propionic acid, butyric acid, valeric acid, caproic acid, heptanoic acid, caprylic acid, capric acid, capric acid, oxalic acid, acrylic acid, isobutyric acid, isovaleric acid, tetradecanoic acid or oleic acid.

The nitriles are one from or mixture of acetonitrile, propionitrile, butyronitrile, isobutyronitrile or acrylonitrile.

The molar ratio of the amount of the reducing agent to the noble metal compound is from 1 to 107 times.

The ratio of the amount of the reducing agent to the solvent is 1:105 - 30:1.

The weight ratio of the isolated noble metal atoms to the protective agent is arbitrary.

The range of reaction temperature is from -70 to 200 °C.

The range of reaction time is from 0.5 to 200 hours.

One application of isolated noble metal atoms: the isolated noble metal atoms-solid medium new material is prepared by immobilizing the isolated noble metal atoms solution on solid, and the preparation method is Impregnation. The details are as follow:
1) impregnation: fully mixing and impregnating the carrier with isolated noble single atoms solution; and
2) removing reductant and the solvent: vacuum under reduced pressure at -30 to 200 °C to remove the reductant and solvent from the isolated noble metal atoms solution.

The loading amount of isolated noble metal atoms is from 0.01 to 50%.

### BRIEF DESCRIPTION OF THE DRAWINGS

Fig. 1. UV-visible spectra of examples 1, 4, 5, 6, 7, 8, 9, 10, 11, 12, 13, 14, 15, 16, 17, 18.
Fig. 2. UV-visible spectra of example 2.
Fig. 3. UV-visible spectra of example 3.
Fig. 4. Infrared spectrum of CO adsorption on 1 wt% Pt single atom/Al₂O₃ (example 19).
Fig. 5. Infrared spectrum of CO adsorption on 0.01 wt% Pt single atom/Al₂O₃ (example 20).
Fig. 6. Infrared spectrum of CO adsorption on 50 wt% Pt single atom/ Al₂O₃ (example 21).

### DETAILED DESCRIPTION OF THE PREFERRED EMBODIMENT

The invention will be further described in detail below by taking the synthesis of noble metal platinum monoatoms as an example. The protection of the patent is not limited to the specific embodiments but is limited by the claims.

### Example 1

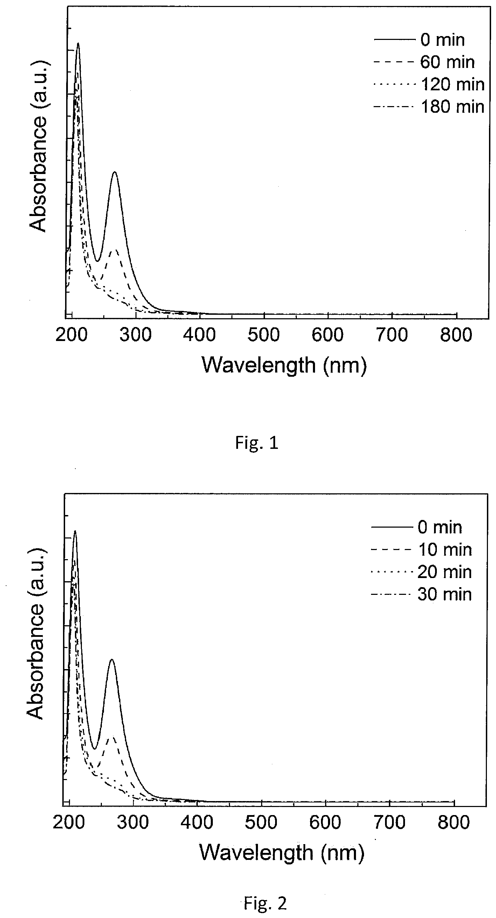

Preparation of isolated platinum atoms in solution: 0.6465 g polyethylene glycol-polysiloxane block copolymer, 135 ml ethanol, 10.2 ml water and 4.8 ml chloroplatinic acid solution with a concentration of 0.018404 mol/L are thoroughly mixed, and then the temperature is raised. The chloroplatinic acid is completely reduced under reflux condensation at 105 °C for 3 hours. The UV-visible absorption spectrum (Fig. 1) shows that chloroplatinic acid is completely reduced. (Note: The ultraviolet absorption peak at 265 nm represents the absorption peak of PtCl₆²⁻, and the disappearance of the ultraviolet absorption peak indicates that chloroplatinic acid is completely reduced.)

### Example 2

Preparation of isolated platinum atoms in solution: 0.6465 g polyethylene glycol-polysiloxane block copolymer, 135 ml ethanol, 10.2 ml water and 4.8 ml chloroplatinic acid solution with a concentration of 0.018404 mol/L are thoroughly mixed, and then the temperature is raised. The chloroplatinic acid is completely reduced under reflux condensation at 200 °C for 30 min. The UV-visible absorption spectrum (Fig. 2) shows that chloroplatinic acid is completely reduced.

### Example 3

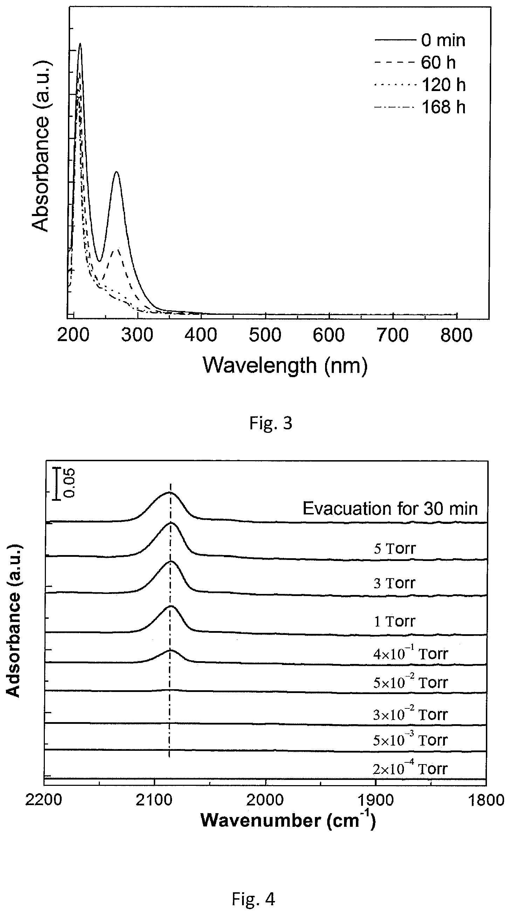

Preparation of isolated platinum atoms in solution: 0.6465 g polyethylene glycol-polysiloxane block copolymer, 135 ml ethanol, 10.2 ml water and 4.8 ml chloroplatinic acid solution with a concentration of 0.018404 mol/L are thoroughly mixed, and then the temperature is raised. The chloroplatinic acid is completely reduced under reflux condensation at -70 °C for 200 h. The UV-visible absorption spectrum (Fig. 3) shows that chloroplatinic acid is completely reduced.

### Example 4

Preparation of isolated platinum atoms in solution: 0.0344 g polyethylene glycol-polysiloxane block copolymer, 135 ml ethanol, 10.2 ml water and 4.8 ml chloroplatinic acid solution with a concentration of 0.018404 mol/L (the ratio of Pt single atom to protective reagent is 50wt%) are thoroughly mixed, and then the temperature is raised. The chloroplatinic acid is completely reduced under reflux condensation at 105 °C for 3 hours. The UV-visible absorption spectrum (Fig. 1) shows that chloroplatinic acid is completely reduced.

### Example 5

Preparation of isolated platinum atoms in solution: 1719.92 g polyethylene glycol-polysiloxane block copolymer, 1000 ml ethanol, 100 ml water and 4.8 ml chloroplatinic acid solution with a concentration of 0.018404 mol/L (the ratio of Pt single atom to protective reagent is 0.001wt%) are thoroughly mixed, and then the temperature is raised. The chloroplatinic acid is completely reduced under reflux condensation at 105 °C for 3 hours. The UV-visible absorption spectrum (Fig. 1) shows that chloroplatinic acid is completely reduced.

### Example 6

Preparation of isolated platinum atoms in solution: 0.6465 g polyethylene glycol-polysiloxane block copolymer, 4.05 mg ethanol (the ratio of ethanol to H₂PtCl₆ is 1:1 mol/mol), 145 ml water (the ratio of ethanol to water is 1:105 mol/mol) and 4.8 ml chloroplatinic acid solution with a concentration of 0.018404 mol/L are thoroughly mixed, and then the temperature is raised. The chloroplatinic acid is completely reduced under reflux condensation at 105 °C for 3 hours. The UV-visible absorption spectrum (Fig. 1) shows that chloroplatinic acid is completely reduced.

### Example 7

Preparation of isolated platinum atoms in solution: 0.6465 g polyethylene glycol-polysiloxane block copolymer, 882 g ethanol (1.14L, the ratio of ethanol to H₂PtCl₆ is 107:1 mol/mol), 100.2 ml water and 4.8 ml chloroplatinic acid solution with a concentration of 0.018404 mol/L are thoroughly mixed, and then the temperature is raised. The chloroplatinic acid is completely reduced under reflux condensation at 105 °C for 3 hours. The UV-visible absorption spectrum (Fig. 1) shows that chloroplatinic acid is completely reduced.

### Example 8

Preparation of isolated platinum atoms in solution: 0.6465 g polyethylene glycol-polysiloxane block copolymer, 148.5 ml ethanol, 1.02 ml water (the ratio of ethanol to water is 30:1 mol/mol) and 4.8 ml chloroplatinic acid solution with a concentration of 0.018404 mol/L are thoroughly mixed, and then the temperature is raised. The chloroplatinic acid is completely reduced under reflux condensation at 105 °C for 3 hours. The UV-visible absorption spectrum (Fig. 1) shows that chloroplatinic acid is completely reduced.

### Example 9

Preparation of isolated platinum atoms in solution: 0.6465 g polyethylene glycol-polysiloxane block copolymer, 135 ml ethanol, 10.2 ml toluene and 4.8 ml chloroplatinic acid solution with a concentration of 0.018404 mol/L are thoroughly mixed, and then the temperature is raised. The chloroplatinic acid is completely reduced under reflux condensation at 105 °C for 3 hours. The UV-visible absorption spectrum (Fig. 1) shows that chloroplatinic acid is completely reduced.

### Example 10

Preparation of isolated platinum atoms in solution: 0.6465 g polyethylene glycol-polysiloxane block copolymer, 135 ml ethanol, 10.2 ml hexane and 4.8 ml chloroplatinic acid solution with a concentration of 0.018404 mol/L are thoroughly mixed, and then the temperature is raised. The chloroplatinic acid is completely reduced under reflux condensation at 105 °C for 3 hours. The UV-visible absorption spectrum (Fig. 1) shows that chloroplatinic acid is completely reduced.

### Example 11

Preparation of isolated platinum atoms in solution: 0.6465 g polyethylene glycol-polysiloxane block copolymer, 135 ml ethanol, 10.2 ml cyclooctane and 4.8 ml chloroplatinic acid solution with a concentration of 0.018404 mol/L are thoroughly mixed, and then the temperature is raised. The chloroplatinic acid is completely reduced under reflux condensation at 105 °C for 3 hours. The UV-visible absorption spectrum (Fig. 1) shows that chloroplatinic acid is completely reduced.

### Example 12

Preparation of isolated platinum atoms in solution: 0.6465 g polyethylene glycol-polysiloxane block copolymer, 135 ml ethanol, 10.2 ml chlorobutane and 4.8 ml chloroplatinic acid solution with a concentration of 0.018404 mol/L are thoroughly mixed, and then the temperature is raised. The chloroplatinic acid is completely reduced under reflux condensation at 105 °C for 3 hours. The UV-visible absorption spectrum (Fig. 1) shows that chloroplatinic acid is completely reduced.

### Example 13

Preparation of isolated platinum atoms in solution: 0.6465 g polyethylene glycol-polysiloxane block copolymer, 135 ml ethanol, 10.2 ml n-butanol and 4.8 ml chloroplatinic acid solution with a concentration of 0.018404 mol/L are thoroughly mixed, and then the temperature is raised. The chloroplatinic acid is completely reduced under reflux condensation at 105 °C for 3 hours. The UV-visible absorption spectrum (Fig. 1) shows that chloroplatinic acid is completely reduced.

### Example 14

Preparation of isolated platinum atoms in solution: 0.6465 g polyethylene glycol-polysiloxane block copolymer, 135 ml ethanol, 10.2 ml dipropyl ether and 4.8 ml chloroplatinic acid solution with a concentration of 0.018404 mol/L are thoroughly mixed, and then the temperature is raised. The chloroplatinic acid is completely reduced under reflux condensation at 105 °C for 3 hours. The UV-visible absorption spectrum (Fig. 1) shows that chloroplatinic acid is completely reduced.

### Example 15

Preparation of isolated platinum atoms in solution: 0.6465 g polyethylene glycol-polysiloxane block copolymer, 135 ml ethanol, 10.2 ml 2-hexanone and 4.8 ml chloroplatinic acid solution with a concentration of 0.018404 mol/L are thoroughly mixed, and then the temperature is raised. The chloroplatinic acid is completely reduced under reflux condensation at 105 °C for 3 hours. The UV-visible absorption spectrum (Fig. 1) shows that chloroplatinic acid is completely reduced.

### Example 16

Preparation of isolated platinum atoms in solution: 0.6465 g polyethylene glycol-polysiloxane block copolymer, 135 ml ethanol, 10.2 ml butyraldehyde and 4.8 ml chloroplatinic acid solution with a concentration of 0.018404 mol/L are thoroughly mixed, and then the temperature is raised. The chloroplatinic acid is completely reduced under reflux condensation at 105 °C for 3 hours. The UV-visible absorption spectrum (Fig. 1) shows that chloroplatinic acid is completely reduced.

### Example 17

Preparation of isolated platinum atoms in solution: 0.6465 g polyethylene glycol-polysiloxane block copolymer, 135 ml ethanol, 10.2 ml propionic acid and 4.8 ml chloroplatinic acid solution with a concentration of 0.018404 mol/L are thoroughly mixed, and then the temperature is raised. The chloroplatinic acid is completely reduced under reflux condensation at 105 °C for 3 hours. The UV-visible absorption spectrum (Fig. 1) shows that chloroplatinic acid is completely reduced.

### Example 18

Preparation of isolated platinum atoms in solution: 0.6465 g polyethylene glycol-polysiloxane block copolymer, 135 ml ethanol, 10.2 ml propiononitrile and 4.8 ml chloroplatinic acid solution with a concentration of 0.018404 mol/L are thoroughly mixed, and then the temperature is raised. The chloroplatinic acid is completely reduced under reflux condensation at 105 °C for 3 hours. The UV-visible absorption spectrum (Fig. 1) shows that chloroplatinic acid is completely reduced.

### Example 19

Preparation of Al₂O₃ supported platinum single atom: 1g γ-Al₂O₃ was added to 87 ml Pt singe atom solution from example 1. The support is impregnated for 1 h. Ethanol and water were removed at 40 °C under vacuum, and the 1wt% Pt single atom/γ-Al₂O₃ is obtained. The infrared spectrum of CO adsorption on 1wt% Pt single atom/γ-Al₂O₃ identifies the success of the material preparation.
(explanation: peak between 1800 and 1900 cm⁻¹ is attributed to bridged CO on Pt, and the peak at 2086 cm⁻¹ is attributed to linear adsorption of CO on Pt. Peak between 1800 and 1900 cm⁻¹ is not observed in Fig. 4, which identifies the absence of Pt particles or clusters containing two or more Pt atom. With the increase of CO pressure, there is no blue shift at the peak position at 2086 cm⁻¹, which indicates that platinum exists in the form of single atoms. Based on above, the new material (1wt%Pt single atom/γ-Al₂O₃) is successfully synthesized.)

### Example 20

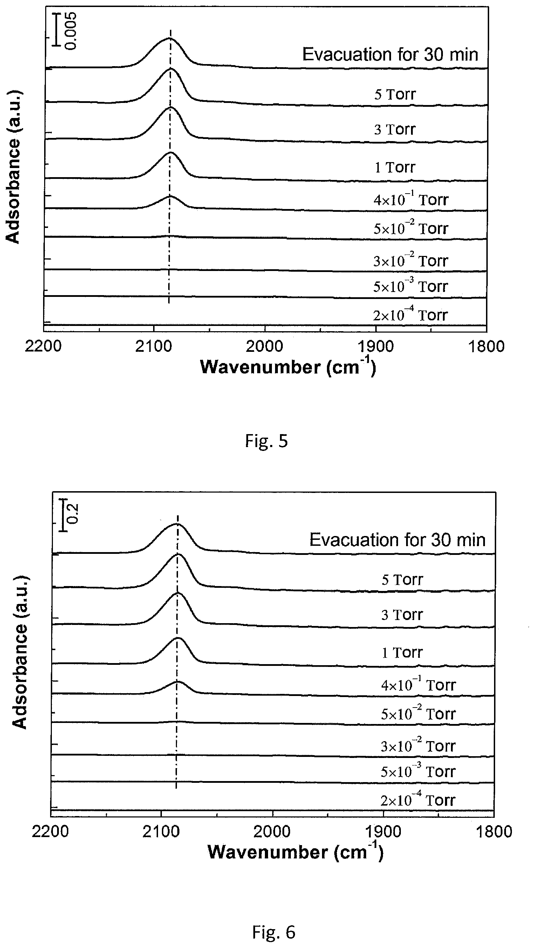

Preparation of Al₂O₃ supported platinum single atom: 100 g γ-Al₂O₃ was added to 87 ml Pt singe atom solution from example 1. The support is impregnated for 1 h. Ethanol and water were removed at 40 °C under vacuum, and the 0.01wt% Pt single atom/γ-Al₂O₃ is obtained. The infrared spectrum of CO adsorption on 0.01wt%Pt single atom/γ-Al₂O₃ shows in Fig. 5.

### Example 21

Preparation of Al₂O₃ supported platinum single atom: 0.1 g γ-Al₂O₃ was added to 87 ml Pt singe atom solution from example 1. The support is impregnated for 1 h. Ethanol and water were removed at 40 °C under vacuum, and the 0.01wt% Pt single atom/γ-Al₂O₃ is obtained. The infrared spectrum of CO adsorption on 10wt% Pt single atom/ Al₂O₃ shows in Fig. 6.

## Claims

1. A method of preparing isolated noble metal single atoms in solution, **characterized in that** a protective agent, a noble metal compound precursor, a reducing agent and a solvent are sufficiently mixed according to a certain ratio, and isolated noble single atoms are obtained after reaction at a certain temperature.

2. The isolated noble single atoms material stable in solution of claim 1 **characterized in that** the isolated noble metal atoms are platinum group elements or post platinum group elements; the platinum group elements are palladium, rhodium, ruthenium, iridium, ruthenium or platinum; the post platinum group elements are silver or gold.

3. The method of claim 1 **characterized in that** said noble metal compound precursor is a platinum compound precursor, a palladium compound precursor, a rhodium compound precursor, an iridium compound precursor, a ruthenium compound precursor, an osmium compound precursor, a gold compound precursor, or a silver compound precursor.

4. The method of claim 3 **characterized in that** said platinum compound precursor is one of chloroplatinic acid, sodium chloroplatinate, potassium chloroplatinate, platinite chloride, platinum chloride, diethylamine chloride platinum, platinum nitrate, 1, 5-cyclooctadiene dichloride platinum, trichloride (ethylene) potassium platinate, dichloro-tetramine platinum, dinitrile phenyl dichloroplatin, dichloroplatin (triphenyl phosphite) dichloroplatin or ammonium tetrachloroplatinate.

5. The method of claim 3 **characterized in that** said palladium compound precursor is one of palladium chloride, palladium nitrate, tetrachloroplatinate, palladium(2+) tetraammine-dichloride, trans-dichlorodiammine palladium (II), palladium(II) acetate, palladium(II) sulfate, palladium(II) trifluoroacetate, palladium(II) acetylacetonate, potassium hexachloropalladate(IV), ammonium hexachloropalladate(IV), palladium tetraammonia (II) acetic acid, sodium tetrachloropalladate(II), potassium tetrachloropalladate(II), ammonium tetrachloropalladate(II), potassium tetracyanopalladate(II) hydrate, potassium tetrabromopalladate(II), palladium pivalate, palladium(II) cyanide, palladium(II) bromide, palladium thiosulfate(II), palladium(II) iodide, sulfonated palladium(II), (1,3-bis(diphenylphosphino)propane)palladium(II) chloride, dichloro(1,5-cyclooctadiene)palladium(II), (2,2' -Bipyridine) dichloropalladium(II), [1,2-bis(diphenylphosphino)ethane]dichloropalladium(II), 1,4-bis(diphenylphosphino)butane-palladium(II) chloride, and (ethylenediamine) palladium(II) chloride.

6. The method of claim 3 **characterized in that** said rhodium compound precursor is one of rhodium (III) nitrate, acetyl acetone rhodium (III), Di- µ-chlorotetraethylene dirhodium(I), sodium hexachlororhodate(III), potassium hexachlororhodate(III), ammonium hexachlororhodate(III), rhodium chloride (III), tris(triphenylphosphine)rhodium(I) chloride, trichlorotris(ethylenediamine)rhodium(III), bis(ethylene) rhodium(I) acetylacetonate(I), (acetylacetonato)dicarbonylrhodium(I), dicarbonyl (pentamethylcyclopentadienyl) rhodium(I), and bis(1,5-cyclooctadiene)rhodium(I) tetrafluoroborate.

7. The method of claim 3 **characterized in that** said iridium compound precursor is one of hydrogen hexachloroiridate(IV),iridium(III) acetylacetonate, sodium hexachloroiridate(III), potassium hexachloroiridate(III), ammonium hexachloroiridate(IV), potassium hexanitroiridate(III), iridium(III) chloride, iridium(III) bromide, (acetylacetonato) (1,5-cyclooctadiene)iridium(I), (1,5-cyclooctadiene) (hexafluoroacetylacetonato) iridium(I), pentaamminechloroiridium(III) chloride, dichlorotetrakis (2-(2-pyridinyl) phenyl) diiridium(III), (acetylacetonato) dicarbonyliridium(I), bis(1,5-cyclooctadiene) iridium(I) tetrafluoroborate, (1,5-cyclooctadiene) (pyridine) (tricyclohexylphosphine)-iridium(I) hexafluorophosphate, and bis[1,2-bis(diphenylphosphino)ethane] carbonylchloroiridium(I).

8. The method of claim 3 **characterized in that** the ruthenium compound precursor is one of ruthenium(III) chloride, ruthenium(III) acetylacetonate, ruthenium(III) nitrosyl nitrate solution, hexaammineruthenium(II) chloride, ammonium hexacyanoruthenate(II), potassium hexacyanoruthenate(II), tetrapropylammonium perruthenate, ethylenediaminetetraacetic acid ruthenium(III) chloride, potassium aquapentachlororuthenate(III), ruthenium(III) iodide hydrate, tris(triphenylphosphine) ruthenium(II) dichloride, hexaammineruthenium(III) chloride, dichlorotetrakis (triphenylphosphine)ruthenium(II), dichloro[(2,6,10-dodecatriene)-1,12-diyl] ruthenium(IV), dichlorotris(1,10-phenanthroline)ruthenium(II), bis(triphenylphosphine) ruthenium(II) dicarbonyl chloride, and pentaamminechlororuthenium(III) chloride.

9. The method of claim 3 **characterized in that** said osmium compound precursor is one of potassium osmate (VI) dihydrate, potassium hexachloroosmate (IV), ammonium hexachloroosmate (IV), bis(pentamethylcyclopentadienyl)osmium (II), osmium (III) chloride, and pentaammine (trifluoromethanesulfonato)osmium (III) triflate.

10. The method of claim 3 **characterized in that** the gold compound precursor is one of potassium gold(III) chloride, sodium dicyanoaurate(I), gold (I) chloride, Chloro(dimethylsulfide)gold (I), gold (III) oxide, trichloro(pyridine)gold (III), gold (III) chloride, sodium tetrachloroaurate (III), gold (III) chloride, ammonium tetrachloroaurate(III), gold(I) cyanide, chlorocarbonylgold(I), gold(III) bromide, gold(I) iodide, and chloro (triphenylphosphine)gold (I).

11. The method of claim 3 **characterized in that** the silver compound precursor is one of silver nitrate, silver lactate, silver citrate, silver chlorate, silver cyanate, silver bromate, silver acetate, silver trifluoroacetate, silver acetylacetonate, potassium dicyanoargentate, silver pentafluoropropionate, silver cyanide, and silver benzoate.

12. The method of claim 1 **characterized in that** the reducing agent is one from alcohol compounds, glucose, formic acid, citric acid, tartaric acid, ascorbic acid, hydrazine hydrate, borohydride, or hydrogen.

13. The method of claim 12 **characterized in that** the alcohol compounds are one from or mixture of methanol, ethanol, propanol, isopropanol, n-butanol, isobutanol, butanol, tert-butanol, ethylene glycol or glycerol.

14. The isolated noble single atoms material stable in solution of claim 1 **characterized in that** the protective agent is a block copolymer containing siloxane groups and hydrophilic polymers.

15. The method of claim 1 **characterized in that** the protective agent is a block copolymer containing siloxane groups and polyether groups.

16. The method of claim 15 **characterized in that** the block copolymer containing siloxane groups and polyether groups protective agent is a polysiloxane-polyglycol copolymer.

17. The method of claim 16, **characterized in that** said polysiloxane-polyglycol copolymer is a polyethyleneglycol copolymer with a structural formula as follows:

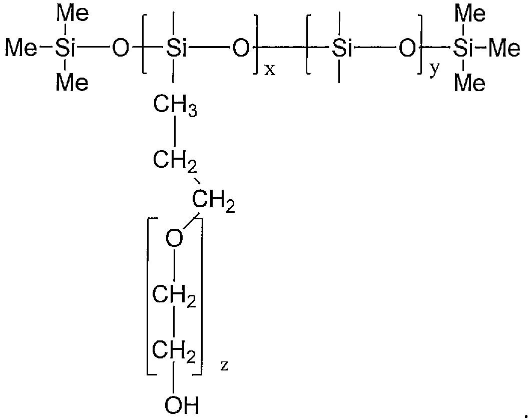

18. The method of claim 1, **characterized in that** said solvent is an organic or inorganic solvent.

19. The method of claim 18, **characterized in that** said inorganic solvent is one from or mixture of water, sulfoxide chloride, thioyl chloride, hydrazine hydrate, thioyl chloride fluoride, hydrochloric acid, nitric acid or sulfuric acid.

20. The method of claim 18, **characterized in that** said organic solvent is one from or mixture of aromatic hydrocarbons, aliphatic hydrocarbons, alicyclic hydrocarbons, halogenated hydrocarbons, alcohols, ethers, esters, ketones, aldehydes, carboxylic acids, nitriles, pyridines, and phenols.

21. The method of claim 20, **characterized in that** said aromatic hydrocarbons are one from or mixture of benzene, toluene, ethylbenzene, xylene, trimethylbenzene, propylene, isopropyl benzene, naphthalene, anthracene, and phenanthrene.

22. The method of claim 20, **characterized in that** said aliphatic hydrocarbons are one from or mixture of pentane, hexane, heptane, octane, decane, hexane, undecane, dodecane, tridecane, tetradecane, pentadecane, hexadecane, heptadecane, octadecane, nonadecane, and eicosane.

23. The method of claim 20, **characterized in that** said alicyclic hydrocarbons are one from or mixture of cyclopentane, cyclohexane, cycloheptane, cyclooctane, cyclononane, cyclonontane, cyclohexane, cycloundecane, cyclododecane, and cyclotridecane.

24. The method of claim 20, **characterized in that** said halogenated hydrocarbons are one from or mixture of chloromethane, methyl bromide, chloroethane, bromoethane, chloropropane, bromobutane, chlorobutane, chloropentane, chlorohexane, bromopentane, chloroheptane, bromoheptane, chlorooctane, chlorooctane, chlorononane, bromooctane, chlorooctane, chlorooctane, chlorooctane, chlorooctane, chlorooctane, chlorooctane, chlorooctane, chlorooctane, chlorooctane, chlorooctane, chlorooctane, chlorobenzene, bromobenzene, chlorotoluene, bromotoluene, chloroethyl benzene, and bromoethyl benzene.

25. The method of claim 20, **characterized in that** said alcohols are one from or mixture of methanol, ethanol, propanol, isopropanol, n-butanol, isobutanol, 2-butanol, tert-butanol, ethylene glycol, and goycerol.

26. The method of claim 20, **characterized in that** said ethers are one from or mixture of ether, dipropyl ether, diisopropyl ether, ethyl butyl ether, dibutyl ether, diamyl ether, diisoamyl ether, dihexyl ether, tetrahydrofuran, 1, 4-dioxane, trimeraldehyde, propylene oxide, dichlorodiethyl ether, and dichlorodiisopropyl ether.

27. The method of claim 20, **characterized in that** said esters are one from or mixture of methyl formate, ethyl acetate, methyl acetate, propyl acetate, butyl acetate, isopropyl acetate, butyl acetate, butyl acetate, ethyl butyrate, propyl butyrate, methyl acrylate, ethyl acrylate, diethyl ethaneioate, ethyl isobutyrate, ethyl 2-methylbutyrate, dibutyl sebacate, dimethyl phthalate, and dibutyl phthalate.

28. The method of claim 20, **characterized in that** said ketones are one from or mixture of acetone, methyl ketone, 2 - pentanone, 3 - pentanone, acetyl acetone, Methyl Isopropyl Ketone, 2 - hexanone, 3 - hexanone, 2 - methyl - 3 - pentanone, Pinacolone, 4 - methyl - 2 - pentanone, 2 - heptyl ketone, cyclopentanone and cyclohexanone, 3-heptanone, 4-heptanone, 2,4-Dimethyl-3-pentanone, ketone, 5 - methyl - 3 - heptyl ketones, 2, 6 - dimethyl - 3 - heptyl ketone, nonyl ketone or the mixture of them.

29. The method of claim 20, **characterized in that** said aldehydes are one from or mixture of acetaldehyde, propionaldehyde, acrolein, isobutyraldehyde, butyraldehyde, benzaldehyde, paraldehyde, cinnamaldehyde or crotonaldehyde.

30. The method of claim 20, **characterized in that** said carboxylic acids are one from or mixture of formic acid, acetic acid, propionic acid, butyric acid, valeric acid, caproic acid, heptanoic acid, caprylic acid, capric acid, capric acid, oxalic acid, acrylic acid, isobutyric acid, isovaleric acid, tetradecanoic acid, and oleic acid.

31. The method of claim 20, **characterized in that** said nitriles are one from or mixture of acetonitrile, propionitrile, butyronitrile, isobutyronitrile, and acrylonitrile.

32. The method of claim 1, **characterized in that** the molar ratio of the amount of the reducing agent to the noble metal compound precursor is from 1 to 10⁷:1.

33. The method of claim 1, **characterized in that** the molar ratio of the amount of the reducing agent to the solvent is 1:10⁵ - 30:1.

34. The method of claim 1, **characterized in that** weight ratio of the isolated noble metal atoms to the protective agent 1 is arbitrary.

35. The method of claim 1, **characterized in that** the range of the reaction temperature is from -70 to 200 °C.

36. The method of claim 1, **characterized in that** the range of reaction time is from 0.5 to 200 hours.

37. Application of isolated noble metal atoms, **characterized in that** the isolated noble metal atoms-solid medium new material is prepared by immobilizing the isolated noble metal atoms solution on solid medium, and the preparation method is impregnation, comprising:
1) impregnation: fully mixing and impregnating the solid medium with isolated noble single atoms solution; and
2) removing reductant and solvent: vacuum under reduced pressure at -30 to 200 °C to remove the reductant and solvent from the isolated noble metal atoms solution.

38. The application of claim 37, **characterized in that** the loading amount of the isolated noble metal atoms on the isolated noble metal atoms-solid medium material is from 0.01 to 50%.
